# EUROPEAN PATENT APPLICATION

(11) **EP 4 789 926 A1**
(43) Date of publication of application: **12.08.2026**
(21) Application number: 26157654.0
(22) Date of filing: 10.02.2026
(51) Int. Cl.: B60R 21/232, B60R 21/233

(54) **METHOD AND VEHICLE WITH AN IMPROVED AIRBAG**

(30) Priority: 11.02.2025 IT 202500002577
(71) Applicant: FERRARI S.p.A., 41100 Modena (IT)
(72) Inventor: PETTINATO, Elena, 41100 Modena (IT); FUMAROLA, Gianluca, 41100 Modena (IT)
(74) Representative: Studio Torta S.p.A.

(57) **Abstract**

A method for the protection of the passengers of a vehicle (1) having a row of seats (5; 5I; 5II) inside a passenger compartment (3) delimited above by an inner roof (21); wherein an airbag (7; 7I; 7II) is fixed, in use, to the inner roof (21) of the passenger compartment (3) and has a flexible body (8) with one or more gas areas (10), each of which is configured to form a respective cushion (13); wherein the airbag (7; 7I; 7II), when it is open, protrudes from the inner roof (21); the flexible body (8) having a maximum width (ymax) greater than 50%, in particular greater than 80% of the width of the passenger compartment (3); when it is open, the airbag (7; 7I; 7II) protects the passengers of an entire row of seats (5; 5I; 5II); when it is open, the airbag (7; 7I; 7II) protrudes under the inner roof (21) of the passenger compartment (3) between the dashboard (22) and the seats and covers, widthwise, at least 50% of the dashboard (22).

## Description

### CROSS-REFERENCE TO RELATED APPLICATIONS

This patent application claims priority from Italian patent application no. 102025000002577 filed on February 11, 2025, the entire disclosure of which is incorporated herein by reference.

### TECHNICAL FIELD

The invention relates to a method for the protection of the passengers of a vehicle with an improved airbag.

### PRIOR ART

It is known that a vehicle comprises airbags configured to inflate almost instantly in the event of a crash. Regulations are also in place governing the necessary operating parameters for each airbag in order to type-approve a vehicle and allow it to be driven on public roads.

Different types of airbags are known, which must be installed on board a vehicle to protect passengers under given conditions of use.

A vehicle generally comprises one or more airbags dedicated to each seat, for example for the front and side protection of the passenger. For example, for the driver's seat, it is known to install an airbag in the steering wheel and/or in the dashboard and in the side door panel. Similarly, for the passenger's seat next to the driver, it is known to place an airbag in the dashboard and in the door panel. For rear seat passenger positions, it is known to install the airbag within the front seat and in the side panels of the interior trim or in the panels of the rear doors (if present).

Known solutions have the drawback of having to provide dedicated housings for accommodating the airbags in a plurality of positions of the vehicle, for example: inside the steering wheel, the dashboard, the side door panels; the side panels of the interior trim.

Known solutions have the drawback of having to install a plurality of airbags, which are different from one another in terms of type, on board the same vehicle. This entails high logistic and installation costs.

Known solutions do not evenly and completely cover the space in front of the passengers, leaving uncovered spaces, for example in the area of the central tunnel.

### DESCRIPTION OF THE INVENTION

The object of the invention is to provide an airbag that makes it possible overcome the drawbacks described above.

According to the invention, there are provided an airbag and a vehicle as set forth in the appended claims.

The dependent claims define special embodiments of the invention.

### BRIEF DESCRIPTION OF THE DRAWINGS

Hereinafter, embodiments of the invention will be described, in order to allow the latter to be better understood, by way of non-limiting example and with reference to the accompanying drawings, wherein:
- figure 1 is a schematic view, with some parts removed for greater clarity, of a known vehicle;
- figure 2 is similar to figure 1 and shows a vehicle according to the invention with deployed and inflated airbargs;

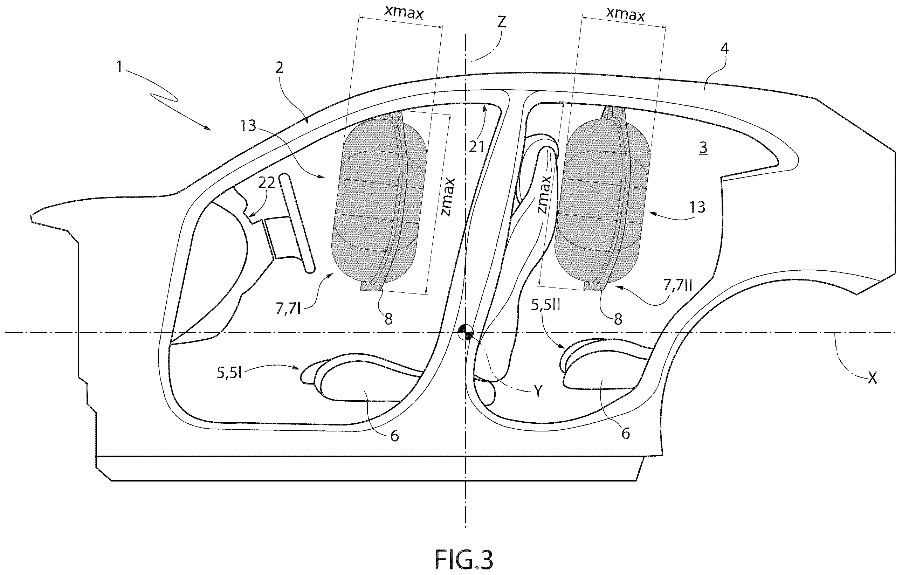

- figure 3 is a side view of figure 2, with some parts removed for greater clarity;
- figure 4 is a schematic perspective view, with some parts removed for greater clarity, of an airbag according to the invention;
- figure 5 is a side view of the airbag of figure 4.

### EMBODIMENTS OF THE INVENTION

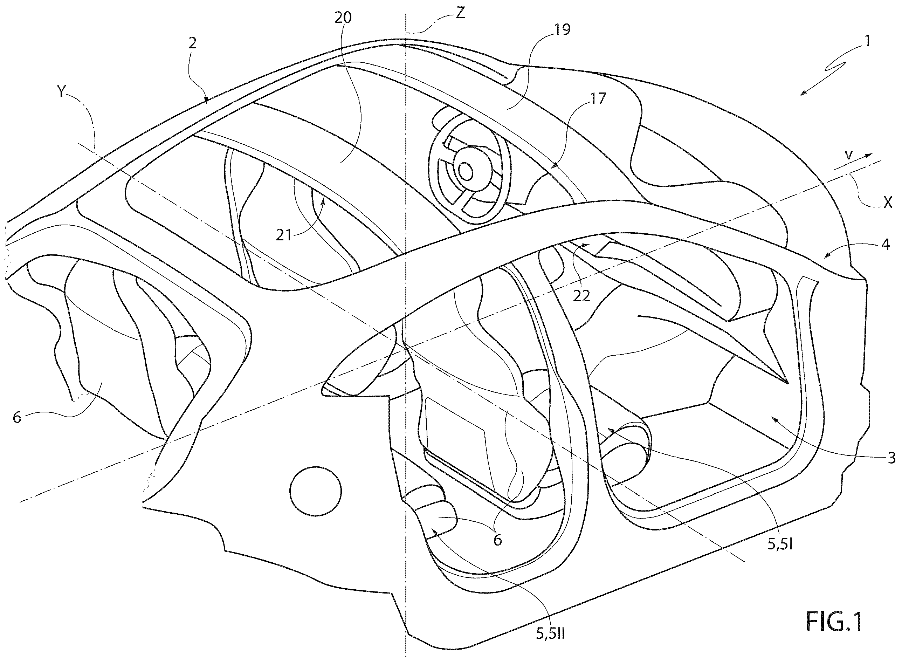

In figure 1, reference number 1 is used to indicate, as a whole, a vehicle comprising, in a known manner: a bearing structure 2 (for example, a body shell and/or a frame), which defines a passenger compartment 3 configured to accommodate at least one driver and possibly one or more passengers; and a body 4, which externally covers the bearing structure 2.

As it is known, the vehicle 1 has: a longitudinal axis X, generally known as the roll axis; a transverse axis Y, generally known as the pitch axis; and a vertical axis Z, generally known as the yaw axis.

The vehicle 1 can rotate-translate, in a known manner, on a horizontal support plane π. The terms "front", "rear", "right", "left", "upper", "lower", "upstream", "downstream" and others similar to them are used with reference to the vehicle 1 moving on the support plane in the forward direction v. The terms "outer", "inner" and others similar to them are used with reference to the passenger compartment accommodating the driver of the vehicle 1 while driving. The term "depth" means the extension along the longitudinal axis X, the term "width" means the extension along the transverse axis Y; the term "height" means the extension along the vertical axis Z.

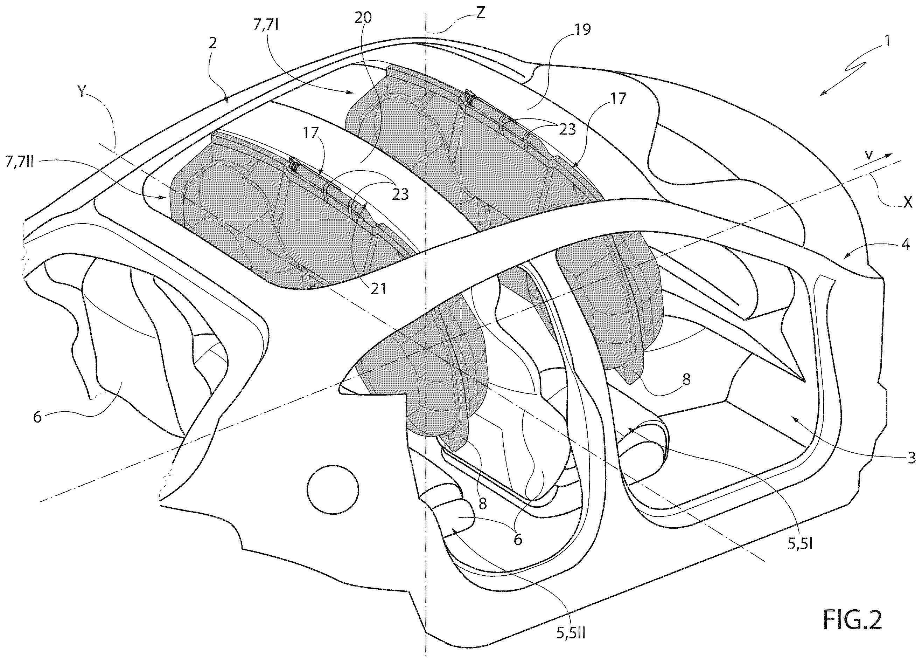

The vehicle 1 comprises a row 5 of seats 6. In particular, the motor vehicle 1 comprises a front row 5I consisting, according to the example shown herein, of the driver's seat 6 and the passenger's seat 6. According to the example shown in figures 1 and 2, the vehicle 1 further comprises a row 5II of rear passenger seats 6. The row 5II of rear seats 6 is optional.

According to the invention, the vehicle 1 comprises an airbag 7, which is configured to protect both the head and the chest of the passengers of a row 5 of seats 6. According to the example shown in the figures, the vehicle comprises a front airbag 7I configured to protect all the passengers of the front row 5I and a rear airbag 5II configured to protect all the passengers of the rear row 5II.

According to a variant which is not shown herein, the vehicle 1 comprises one single row 5 of seats 6 and one single airbag 7 for the protection of all the passengers in the row 5.

Hereinafter reference is made, for the sake of brevity, to a generic airbag 7 whose characteristics are to be considered valid both for the front airbag 7I and for the rear airbag 7II.

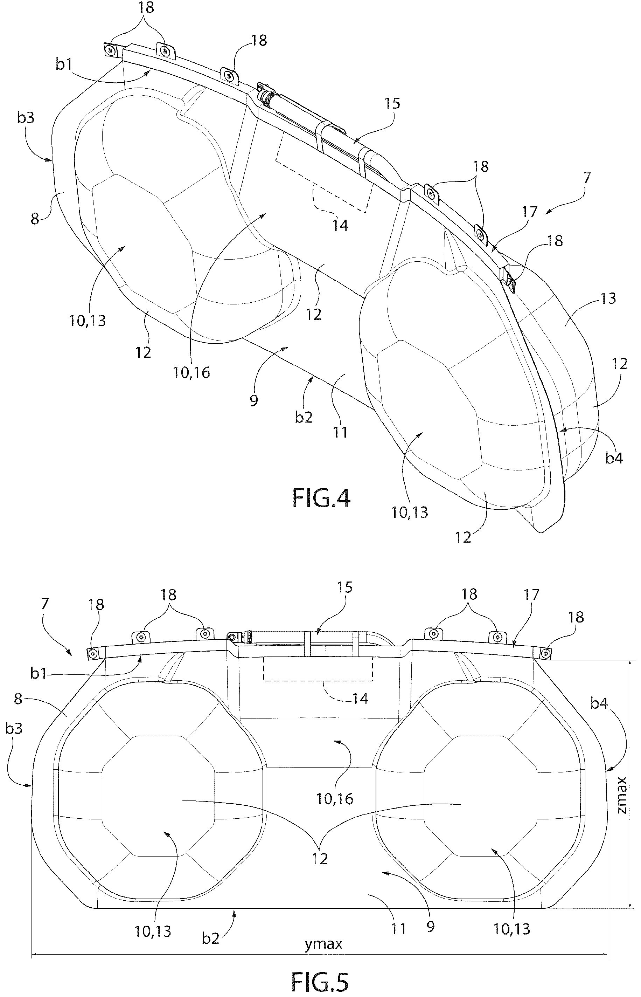

As shown in more detail in figures 4 and 5, the airbag 7 comprises a body 8 made of a flexible material. In particular, the body 8 is suitable for being folded, so as to be stored within the body when it is closed. For example, the airbag 7 is made of a woven/nonwoven material.
The body 8 of the airbag 7 has no-gas areas 9 and gas areas 10.

The expression "no-gas area" means an area that cannot be crossed, in use, by the gas or inflate.

The expression "gas area" means an area that can be crossed, in use, by gas and/or inflate. In other words, a "gas area" is a hollow area of the body 8 of the airbag 7.

The no-gas areas 9 and the gas areas 10 can be obtained in the body 8 in known and schematically illustrated ways.

For example, the body 8 can be manufactured by means of a fabric that is sewn and/or woven so as to obtain one single ply 11, in the area of a respective no-gas area 9, and two opposite plies 12, in the area of a respective gas area 10. In particular, two opposite plies 12 can be shaped so as to form a cushion 13, which hereinafter represents an example of a gas area 10, when the airbag 7 is activated.

The shape and dimensions of each ply 12 are variable. Without lacking generality, two opposite plies 12 can be different from one another.

The body 8 is laterally delimited by: an upper edge b1, a lower edge b2 and two lateral edges, hereinafter identified with b3 and b4.

Advantageously, the body 8 has a maximum width ymax greater than 50%, in particular greater than 80%, of the width of the passenger compartment 3. Maximum width means the extension, in use, along the transverse axis Y of the outermost points of the airbag 7 when it is open. By way of example but not limited to, the body 8 has a maximum width of more than 950 mm.

Advantageously, the body 8 has a maximum height zmax greater than 40%, in particular greater than 50%, of the height of the passenger compartment 3. Maximum height zmax means the extension, in use, along the vertical axis Z of the outermost points of the airbag 7 when it is open. By way of example but not limited to, the body 8 has a maximum height of more than 560 mm.

The maximum depth xmax of the airbag 7 is given by the maximum dimensions of each cushion 13 when it is inflated. Maximum depth xmax means the extension, in use, along the axis X of the outermost points of the cushions 13 when the airbag 7 is open.

According to the example shown in figures 4 and 5, the airbag 7 has two cushions 13, one for each seat 6. Each cushion 13 has a shape and dimensions configured to protect, in use, both the head and the chest of a passenger.

According to the example shown in figures 4 and 5, each cushion 13 has a polygonal shape and a no-gas area 9 is interposed, along the transverse axis Y, between the two cushions 13. The no-gas area 9 is configured so as to be placed, in use, in the area of the central tunnel of the motor vehicle 1. Advantageously, the no-gas area 9 is configured to facilitate the folding of the airbag 7 and to enable the inflation of the sole gas areas 10 of interest, so as to avoid the dispersion of gas for the inflation of areas that are not subjected to possible impacts with the passengers.

Without lacking generality, the shape and dimensions of each cushion 13 are variable and can be different from those illustrated herein.

According to a variant which is not shown herein, the airbag 7 has one single cushion 13, which has a shape and dimensions such as to protect all the passengers of a row 5 of seats 6. In this case, the airbag 7 can be devoid of no-gas areas interposed between two adjacent gas areas.

The airbag 7 has an inlet port 14 (schematically shown in figures 4 and 5 with a dashed line), which is configured to be connected (in a known and schematically shown manner), in use, to a gas generator 15. The gas generator 15 is known and schematically shown. The gas generator 15 can be chosen from a group of generators that are different in terms of type. For example, the gas generator 15 can be a two-stage generator with one nozzle.

According to the example shown in figures 4 and 5, the airbag 7 has a single inlet port 14 and a manifold 16, which fluidly connects the inlet port 14 to each cushion 13. The manifold 16 is a gas area 10. The shape and dimensions of the manifold 16 are variable. Advantageously, the manifold 16 is configured to convey the gases flowing out of the gas generator 15 into each cushion 13 as quickly as possible. Advantageously, the gas generator 15 is configured to generate a quantity of gas sufficient to inflate, in use, both cushions 13 and the manifold 16.

According to a variant which is not shown herein, the airbag has two or more inlet ports, each of which can fluidly be connected to one single respective cushion. In other words, the supply of gas to each cushion can take place separately and the cushions are gas chambers that are supplied separately.

The airbag 7 further comprises a bracket 17, which is made of a rigid material, in particular metal. The bracket 17 is configured to fix the body 8 to the supporting structure 2 of the vehicle. According to the example shown herein, the bracket 17 is configured to fix the generator 15 to the supporting structure 2 of the vehicle 1.

The gas generator 15 is inserted inside the cushion. One end of the gas generator 15 is free to allow for electrical connection in the vehicle, the other end of the gas generator 15 is inside the cushion 13 for letting out gas. In order to improve the connection between the folded cushion 13 and the gas generator 15, two clamps 23 can be applied to the assembled module.

The upper edge b1 of the body 8 is installed on the supporting structure 2 of the vehicle 1 by fixing bushes 18 on the fabric flaps of the upper edge b1.

Figure 2 schematically shows a vehicle 1 according to the invention comprising a front row 5I of seats 6 and a rear row 5II of seats 6. On board the vehicle 1 there are installed: a front airbag 7I to protect the passengers of the front row 5I; and a rear airbag 5II to protect the passengers of the rear row 5II.

According to a variant which is not shown herein, a vehicle 1 with several rows of seats 6 could comprise one single airbag 7 according to the invention installed to protect a respective row 5, whereas traditional airbags could be installed for the other row. For example, a vehicle according to the invention could comprise an airbag according to the invention installed for the protection of passengers in the rear row, while traditional airbags could be installed for the protection of passengers in the front row; this could occur if the regulations of a given country require the possibility of deactivating the airbag of the passenger's seat next to the driver.

According to a further variant which is not shown herein, the airbag 7 can comprise two inlet ports, each of which is connected - independently of the other - to a respective gas source, which can selectively be activated/deactivated. Each inlet port is fluidly connected to one single respective cushion 13. This type of airbag 7 can make it possible to selectively deactivate, by inhibiting the gas source, the inflation of a given cushion 13 (for example, the passenger's cushion next to the driver).
According to the example shown in figure 2, the bracket 17 of the front airbag 7I is fixed to the crossmember 19 of the front windscreen.

Similarly, the bracket 17 of the rear airbag 7II is fixed to the roof crossmember 20.

According to the example shown herein, the gas generator 15 of the front airbag 7I and the gas generator 15 of the rear airbag 7II are located in a central position with respect to the body 18. In this way, advantageously, there is a greater balance when inflating the respective airbag 7.

According to a variant which is not shown herein, the gas generator 15 of an airbag 7 can be located in a lateral position, i.e. an off-centre position, and the gas can be conveyed to a respective inlet port 14 through a respective duct (which is not shown herein).

Advantageously, each airbag 7 is installed so as to be concealed between the trim of the inner roof 21 of the vehicle 1 and the supporting structure 2, in particular the respective crossmember 19, 20. Advantageously, the trim of the inner roof 21 has weakening lines (not shown) to allow the airbag 7 to be opened.

In use, in case of activation of the airbag 7, the gas generator 15 instantaneously generates, in a known manner, the gas that inflates the gas areas 10 of the body 8. Advantageously, according to the solution of this invention, the body 8 opens like a curtain, expanding downwards into the passenger compartment 3.

When it is open, the airbag 7 vertically protrudes downwards from the inner roof 21 of the passenger compartment 3 and deploys between the seats 6 and the dashboard 22 of the motor vehicle 1. In particular, the open airbag 7 has a width ymax and a height zmax such as to guarantee the protection of the head and the chest of any passengers seated in a respective row 5 of seats 6.

Advantageously, a solution of the type described above reduces the costs of developing, installing and maintaining an airbag 7. Indeed, compared to a known solution of the state of the art, there are fewer airbags to be installed. As a matter of fact, one single airbag 7 is enough to protect the passengers of both seats 6 of a row 5 of seats 6. In other words, there should no longer be a front airbag for each seat.

Furthermore, advantageously, the solution according to the invention makes it possible to reduce the weights of the vehicle 1, as the number of installed components is smaller: for example, there is installed one single gas generator 15 (instead of two or more, as is the case in a solution according to the prior art) to inflate the respective airbag 7.

Advantageously, the solution according to the invention makes it possible to simplify the overall design of the entire vehicle 1, since it is no longer necessary to accommodate the airbag 7 inside the dashboard 22 and/or steering wheel and/or seats 6 (in the case of airbags for the rear row 5 II). This eliminates design limitations, thus allowing for greater stylistic freedom.

Advantageously, the solution according to the invention makes it possible to obtain a greater front protection of the passengers, since the airbag 7, when it is open, substantially covers - widthwise - the entire dashboard 2 and the steering wheel, for the front row 5I, and both seats 6 and the central tunnel, for the rear row 5II. In this way, the airbag 7 according to the invention advantageously makes it possible to cover areas that are normally uncovered, hence guaranteeing greater protection for passengers, even against impacts that may throw them diagonally and, therefore, out of the protection perimeter of a traditional airbag.

## Claims

1. An airbag for a vehicle (1) comprising: a supporting structure (2), which upper delimits the inner roof (21) of a passenger compartment (3); and a row of seats (5; 5I; 5II), which comprises in turn a plurality of side by side seats (6); wherein, said airbag (7; 7I; 7II) is configured to be fixed to the inner roof (21) of the passenger compartment (3), and to protect all the passengers of a whole row of seats (5; 5I; 5II).

2. An airbag according to claim 1 and comprising a bracket (17), which is configured to be fixed to the inner roof (21) of the passenger compartment (3), and a flexible body (8) which has one or more first gas area (10, 13), each of which is configured to be inflated, in use, so as to form a respective cushion (13); wherein, the flexible body (8) is connected to said bracket (17) along an upper edge (b1) so as to protrude, at least partially, from said inner roof (21) inside the passenger compartment (3); the flexible body (8) having a maximum width (ymax) which is greater than 50% of the width of the passenger compartment (3).

3. An airbag according to claim 2, wherein the flexible body (8) has a maximum width (ymax) greater than 80% of the width of the passenger compartment (3).

4. An airbag according to claim 2 or 3, wherein, each first gas area (10) is configured to be inflated in front of a respective seat (6).

5. An airbag according to claim 3 or 4, wherein said flexible body (8) has an inlet port (14) which is connected, in use, to a gas generator (15); the flexible body (8) comprising a second gas area (10, 16), in particular a manifold (16), which connect said inlet port (14) to each first gas area (10).

6. A vehicle comprising one or more row of seats (5; 5I; 5II) inside a passenger compartment (3) and a supporting structure (2), which upper delimits the inner roof (21) of said passenger compartment (3); wherein, each row of seats (5; 5I; 5II) comprises a plurality of side by side seats (6); wherein, the vehicle (1) comprises an airbag (7; 7I; 7II) for a respective row of seats (5; 5I; 5II) according to one or more of the claims from 1 to 5.

7. A vehicle according to claim 6, wherein said supporting structure (2) comprises a crossmember (19; 20); the bracket (17) of said airbag (7; 7I; 7II) being fixed to said crossmember (19; 20); wherein, when inflated, the airbag (7; 7I; 7II) protrudes beneath the crossmember (19; 20).

8. A vehicle according to claim 7 and comprising a first row of seats (5I) and a second row of seats (5II); a first airbag (7I) according to any claim from 1 to 7 and a second airbag (7II) according to any claim from 1 to 7; wherein, the supporting structure (2) of said vehicle (1) comprises a first crossmember (19), in particular the crossmember of the windscreen, which is disposed above the first row of seats (5I); and a second crossmember (20), in particular a roof crossmember, which is disposed above the second row of seats (5II); wherein, the bracket (17) of the first airbag (7I) is fixed to the first crossmember (19) and the bracket (17) of the second airbag (7II) is fixed to the second crossmember (20).

9. A method for passengers protection of a vehicle (1) comprising one or more row of seats (5; 5I; 5II) inside a passenger compartment (3) and a supporting structure (2) which upper delimits the inner roof (21) of said passenger compartment (3); wherein, each row of seats (5; 5I; 5II) comprises a plurality of side by side seats (6); the method being **characterized by** inflating an airbag (7; 7I; 7II) to protect the passengers of a whole row of seats (5; 5I; 5II).

10. A method according to claim 9, wherein said airbag (7; 7I; 7II) comprises: a bracket (17), which is fixed, in use, to the inner roof (21) of the passenger compartment (3); and a flexible body (8), which has one or more first gas area (10, 13), each of which is configured to be inflated, in use, so as to form a respective cushion (13); wherein, the flexible body (8) is connected to said bracket (17) along an upper edge (b1); wherein, when inflated, the airbag (7; 7I; 7II) protrudes, at least partially, from said inner roof (21); wherein, when inflated, the flexible body (8) has a maximum width (ymax) which is greater than 50% of the width of the passenger compartment (3).

11. A method according to claim 10, wherein the flexible body (8) of the airbag (7; 7I; 7II) comprises a plurality of first gas area (10, 13); the method being **characterized by** the fact that, during inflating, all the cushions (13) of the same flexible body (8) are inflated contemporarily; wherein, each cushion (13) is inflated in front of a respective seat (6).
